**Europäisches Patentamt**

**European Patent Office**

**Office européen des brevets**

(11) Veröffentlichungsnummer: **0 070 329**
A1

(12) **EUROPÄISCHE PATENTANMELDUNG**

(21) Anmeldenummer: 81105775.1

(51) Int. Cl.³: **B 60 P 3/22**

(22) Anmeldetag: 22.07.81

(43) Veröffentlichungstag der Anmeldung: 26.01.83
Patentblatt 83/4

(84) Benannte Vertragsstaaten: **AT BE DE FR IT NL**

(71) Anmelder: **Gofa, Gocher Fahrzeugbau GmbH & Co. K.G.,
Am Mooshof, D-4180 Goch 1 (DE)**

(72) Erfinder: **Janssen, Heinrich, Am Nordring 4,
D-4180 Goch 1 (DE)**

(74) Vertreter: **Funken, Josef, Dipl.-Ing., Am Lerchenfeld 14,
D-4133 Neukirchen-Vluyn (DE)**

(54) **Mehrachsiger Tankzug.**

(57) Bei einem mehrachsigen Tankzug, der im wesentlichen aus einem Lastkraftwagen-Fahrgestell (10), einem nachlaufenden Fahrwerk (11) und einem freitragenden Tank (12) besteht, ist der Tank (12) in wenigstens einer an dem nachlaufenden Fahrwerk (11) vorgesehenen Lagerschale formschlüssig gelagert und an dem nachlaufenden Fahrwerk (11) leicht lösbar befestigt. An dem nachlaufenden Fahrwerk (11) sind mehrere in Längsrichtung des Tanks (12) miteinander fluchtende Lagerschalen (13, 14, 15, 16, 17) angeordnet, in denen der Tank (12) formschlüssig aufliegt.

EP 0 070 329 A1

0070329

GOFA GOCHER FAHRZEUGBAU GMBH & CO. KG

4180 Goch, Am Mooshof 15

Mehrachsiger Tankzug

Die Erfindung betrifft einen mehrachsigen Tankzug, im wesentlichen bestehend aus einem Lastkraftwagen-Fahrgestell, einem
nachlaufenden Fahrwerk und einem freitragenden Tank, der auf
dem nachlaufenden Fahrwerk fest und an dem Lastkraftwagen-
Fahrgestell in einem Königszapfen horizontalgelenkig sowie
an- und abkuppelbar gelagert ist.

Bei einem bekannten mehrachsigen Tankzug dieser Art ist der Tank
mit dem nachlaufenden Fahrwerk fest verbunden. Diese feste
Verbindung zwischen dem Tank und dem nachlaufenden Fahrwerk
soll normalerweise während der gesamten Lebensdauer des Tankzuges nicht gelöst werden. Wenngleich eine Lösung dieser Verbindung grundsätzlich zwar möglich ist, so handelt es sich
bei solchen Arbeiten um eine aufwendige Demontage des Tankzuges. Wegen der festen Anordnung des Tanks auf dem nachlaufenden Fahrwerk müssen bei Reparaturarbeiten an dem Tank
oder an dem nachlaufenden Fahrwerk beide Fahrzeugteile, nämlich
der Tank und das nachlaufende Fahrwerk in die Reparaturwerkstatt.
Hinzu kommt, daß bei saisonbedingtem Ausfall etwa des Tanks mit diesem auch das nachlaufende Fahrwerk ebenfalls saisonbedingt ausfällt, obwohl das Fahrwerk selbst an sich
weiter betrieben werden könnte.

Des weiteren sind Tankzüge in Chassis-Bauweise bekannt. Hierbei ist das Chassis am Lastkraftwagen-Fahrgestell horizontalgelenkig sowie an- und abkuppelbar gelagert und am Ende an
einem Fahrwerk befestigt. Der Tank liegt auf dem Chassis auf.
Tankzüge solcher Bauart sind schwer und liegen auf unebenen
Straßen relativ ungünstig. Bei isolierten Tanks zur Aufnahme
heißer Güter, die Temperaturen bis zu 400°C haben können,
sind viele Wärmebrücken vorhanden, was zu hohen Wärmespannungen
zwischen dem Tank und dem Chassis führt.

Der Erfindung liegt die Aufgabe zugrunde, einen mehrachsigen
Tankzug der einleitend genannten Art zu schaffen, dem die
vorerwähnten Nachteile nicht anhaften, der vielmehr so ausgebildet ist, daß er in freitragender Bauweise leicht und ohne
weiteres von dem nachlaufenden Fahrwerk abhebbar und in dieses
einlegbar ist.

Diese Aufgabe wird erfindungsgemäß dadurch gelöst, daß der Tank
in wenigstens einer an dem nachlaufenden Fahrwerk vorgesehenen
Lagerschale formschlüssig gelagert und an dem nachlaufenden
Fahrwerk leicht lösbar befestigt ist.

Wegen der leicht lösbaren Befestigung des Tanks an dem nachlaufenden Fahrwerk ist es ohne weiteres möglich, nach Bedarf den Tank aus der Lagerschale herauszuheben beziehungsweise
anschließend wieder den Tank in die Lagerschale abzusenken.
Das bietet den Vorteil, daß einem Fahrwerk zwei oder gegebenenfalls auch mehr Tanks zugeordnet werden können, so daß bei
saisonbedingtem Ausfall eines Tanks dieser aus der Lagerschale
herausgehoben und abgestellt werden kann und ein anderer Tank,
der in der fraglichen Saison betrieben werden kann, in die
Lagerschale des nachlaufenden Fahrwerkes eingesetzt und mit
dem Fahrwerk leicht lösbar befestigt werden kann.

Auch bei Reparaturfällen ist es möglich, den Tank aus der
Lagerschale des nachlaufenden Fahrwerkes herauszuheben und
entweder nur an dem Tank oder nur an dem Fahrwerk die erforderliche Reparatur durchzuführen, wobei der nicht reparaturbedürftige Teil weiter in Betrieb bleiben kann; bei Totalschaden
nur eines Teils kann nur dieses Teil ersetzt werden und der
nicht defekte Teil weiter verwendet werden.

In weiterer Ausgestaltung der Erfindung ist vorgesehen, daß
an dem nachlaufenden Fahrwerk mehrere in Längsrichtung des
Tankzuges miteinander fluchtende Lagerschalen angeordnet sind,
in denen der Tank formschlüssig aufliegt. Hierdurch ist es
möglich, den Tank über einen vergleichsweise großen Bereich
seiner Länge zu lagern.

Bei Verwendung eines zylindrischen Tanks haben die Lagerschalen
vorteilhafterweise halbkreisförmige Lagerflächen, damit ein formschlüssiges Aufliegen des Tanks in den Lagerschalen möglich ist.

Zweckmäßig bestehen die Lagerschalen aus je einem unteren Auflageteil und je zwei sich an beiden Seiten an dem Auflageteil
anschließenden seitlichen Lagerarmen. Die Dreiteiligkeit einer
Lagerschale bedeutet, daß die Einzelteile noch gut zu handhaben
sind.

Um den Tank möglichst sicher zu lagern, können die seitlichen
Lagerarme sich bis zur horizontalen Mittelebene des Tanks erstrecken. Das hat eine optimale Seitenführung des Tanks zur
Folge.

An dem Tank sind gegenüber den Lagerschalen vorteilhafterweise
kreisförmig umlaufende Lagerringe vorgesehen, die formschlüssig in den Lagerschalen liegen. Hierdurch werden die
unmittelbar von den Lagerschalen herrührenden Reaktionskräfte
von der Tankhaut ferngehalten.

Es empfiehlt sich, am oberen Ende der seitlichen Lagerarme je
eine Befestigungsplatte anzuordnen. Zweckmäßig sind an den
Lagerringen des Tanks oberhalb der horizontalen Mittelebene
Konsolen mit Befestigungsplatten an ihren unteren Enden angeordnet. Die beiden gegenüberliegenden Befestigungsplatten
können dabei durch Schrauben gegeneinander verspannt werden,
so daß sich eine sichere Lagerung des Tanks auf dem nachlaufenden Fahrwerk ergibt.

An dem Behälter      ist ein Zentrierungszapfen      vorgesehen,
der in die Zentrierungsbohrung    des Fahrwerkes      eingreift.

Hierdruch wird der Hauptteil der Schubkraft vom Behälter
auf das Fahrwerk        übertragen.
Zur Aufnahme des anderen Teiles der Schubkraft können an den
Innenseiten der Lagerschalen Lagernuten angeordnet sein, in
denen die Lagerringe des Tanks liegen.

Zwischen den Lagerschalen des nachlaufenden Fahrwerkes und den
Lagerringen des Tanks kann eine wärmeisolierende Schicht angeordnet sein, um den Wärmeverlust beim Transport heißer Güter
minimal zu halten.

Das erfindungsgemäß ausgebildete Tankfahrzeug vereinigt die
Vorteile der freitragenden Bauweise und die der Chassis-
Bauweise miteinander und vermeidet gleichzeitig die Nachteile
beider Bauarten.

Zum Wechseln des Tanks genügen die sich bei dem Tankwagen
befindenden Bordwerkzeuge.

Der Tank ist für alle Gefahrklassen geeignet. Es können
Flüssigkeiten, staubförmige Güter, heiße und kalte Güter von
dem Tank aufgenommen werden. Der Tank ist darüber hinaus auch
für Hochdruckbetrieb geeignet.

Die Erfindung wird nachfolgend anhand eines in der Zeichnung
dargestellten Ausführungsbeispieles des näheren beschrieben.

Es zeigt:

  Fig. 1 eine perspektivische Darstellung des erfindungsgemäß ausgebildeten Tankzuges von

       links hinten,

  Fig. 2 eine schematische Seitenansicht auf den Tankzug,

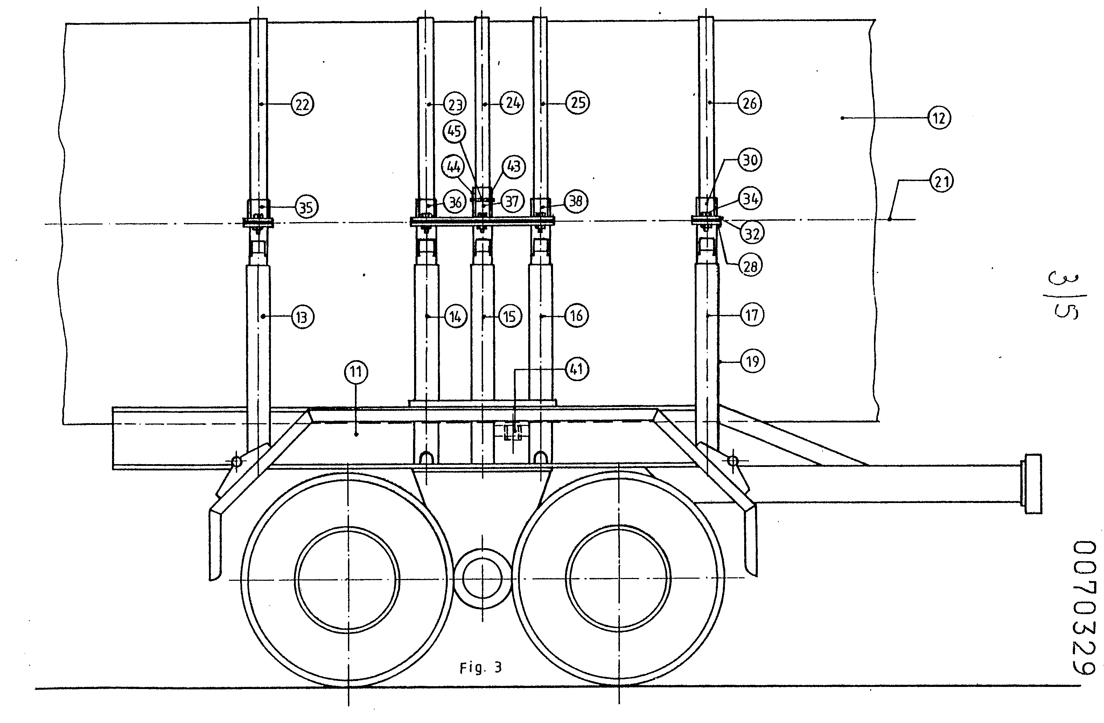

  Fig. 3 eine Seitenansicht auf das nachlaufende Fahrwerk,

  Fig. 4 eine Stirnansicht auf das nachlaufende Fahrwerk, und zwar eine Ansicht von rechts auf Fig. 3 und

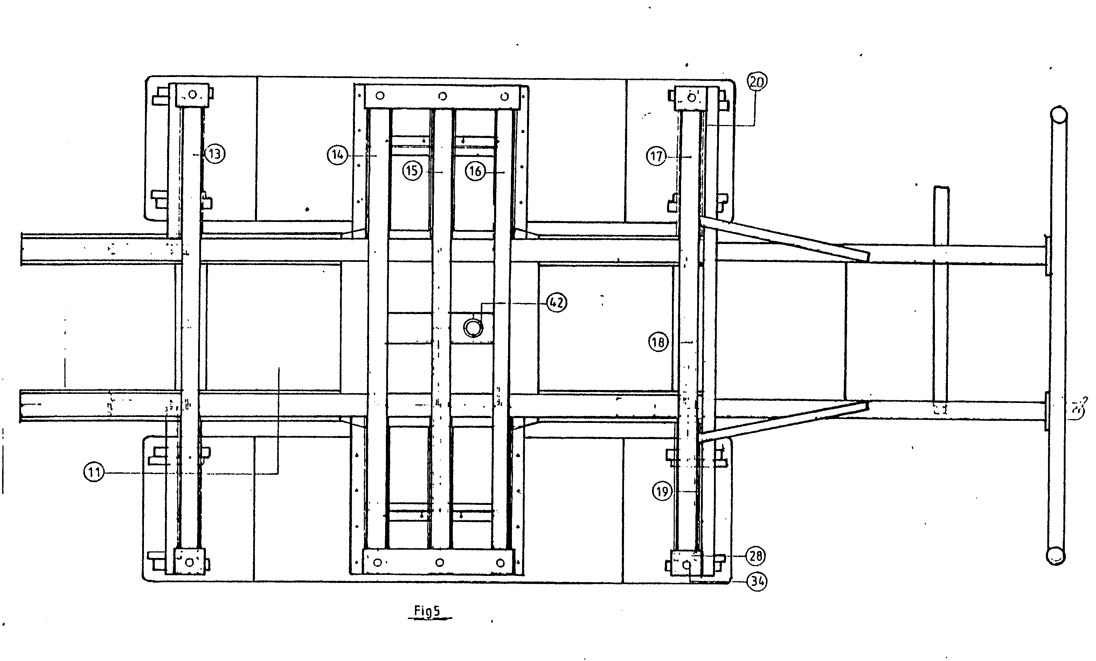

  Fig. 5 eine Draufsicht auf das nachlaufende Fahrwerk, d.h. eine Draufsicht auf Fig. 3.

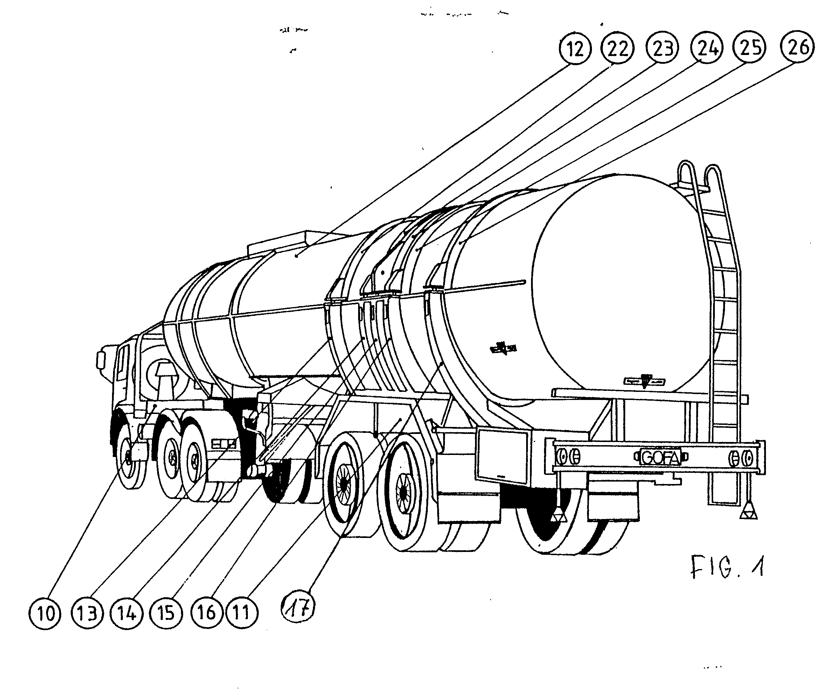

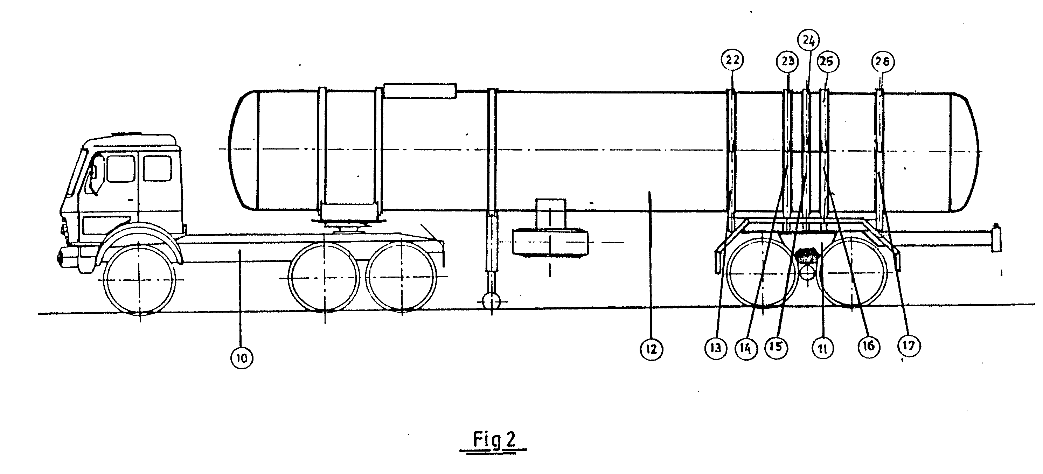

Der in den Figuren 1 und 2 dargestellte fünfachsige Tankzug
besteht im wesentlichen aus einem Lastkraftwagen-Fahrgestell
10, einem nachlaufenden Fahrwerk 11 und einem freitragenden
Tank 12. Letzterer (12) ist an dem Lastkraftwagen-Fahrgestell
10 in einem in der Zeichnung nicht näher dargestellten Königszapfen horizontalgelenkig sowie an- und abkuppelbar gelagert.
An dem nachlaufenden Fahrwerk 11 sind im gewählten Ausführungsbeispiel fünf in Längsrichtung des Tankzuges miteinander
fluchtende Lagerschalen 13, 14, 15, 16 und 17 mit Abstand
voneinander angeordnet. Im dargestellten Ausführungsbeispiel
ist ein zylindrischer Tank 12 verwendet, so daß die Lagerschalen 13, 14, 15, 16 und 17 eine halbkreisförmige Lagerfläche haben.

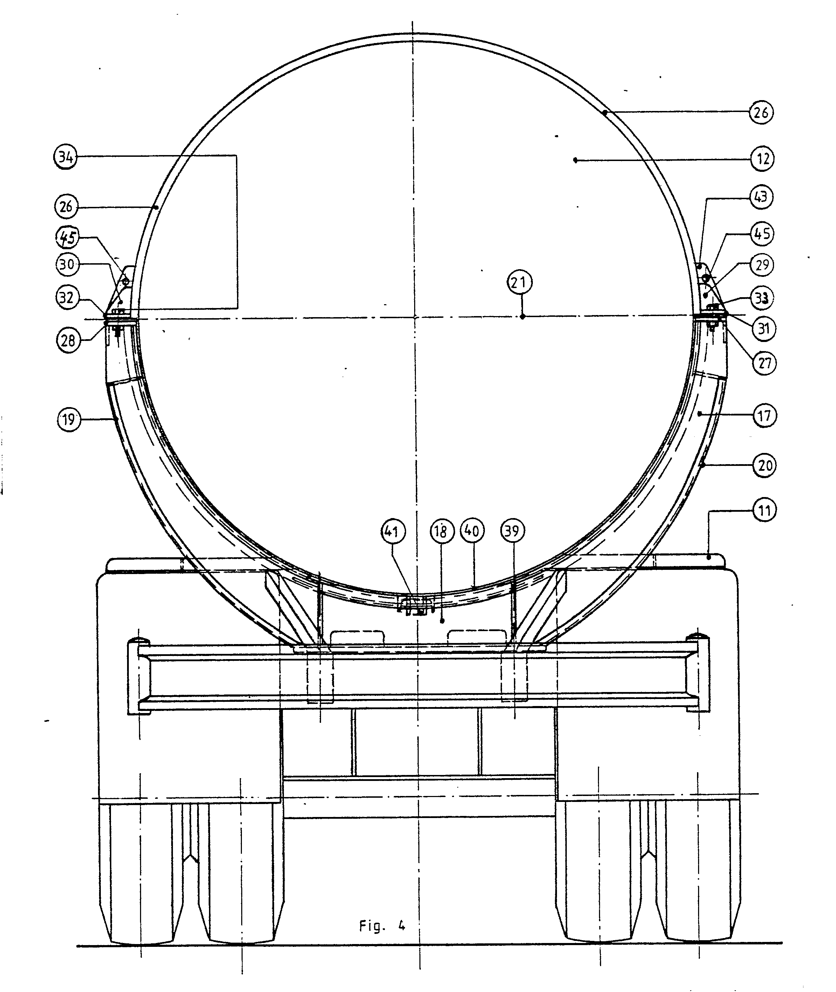

Wie insbesondere aus Figur 4 hervorgeht, besteht die Lagerschale 17 aus einem unteren Auflageteil 18 und zwei sich an
beiden Seiten an dem unteren Auflageteil 18 anschließenden
seitlichen Lagerarmen 19 und 20. Hierbei erstrecken sich die
seitlichen Lagerarme 19 und 20 bis zur horizontalen Mittelebene 21 des Tanks 12.

An dem Tank 12 selbst sind den Lagerschalen 13, 14, 15, 16
und 17 gegenüber kreisförmig umlaufende Lagerringe 22, 23, 24,
25 und 26 vorgesehen, die formschlüssig in den Lagerschalen
13, 14, 15, 16 und 17 liegen. Die seitlichen Lagerarme 19 und
20 haben an ihren oberen Enden Befestigungsplatten 27 und 28.
An dem Lagerring 26 des Tanks 12 sind oberhalb der horizontalen Mittelebene 21 Konsolen 29 und 30 mit Befestigungsplatten
31 und 32 an ihren unteren Enden angeordnet. Mittels Schrauben
33 und 34 sind je zwei gegenüberliegende Befestigungsplatten
28 und 32 bzw. 27 und 31 gegeneinander verspannt.

Der vorstehend genauer beschriebene Aufbau der Lagerschale 17
sowie der Konsole 30 und des Lagerringes 26 gilt entsprechend
auch für die übrigen Lagerschalen 13, 14, 15 und 16 sowie für
die Lagerringe 22, 23, 24, 25 und die an den vorstehend genannten Lagerringen befestigten Konsolen 35, 36, 37 und 38,
so daß sich an dieser Stelle eine weitere Beschreibung dieser
Teile erübrigt.

0070329

An der Innenseite der Lagerschale 17 ist eine Lagernut 39, in
der der Lagerring 26 des Tanks 12 liegt. Zwischen der Lagerschale 17 des nachlaufenden Fahrwerkes 11 und dem Lagerring 26
des Tanks 12 ist eine wärmeisolierende Schicht 40 angeordnet.
Ebenso wie die Lagerschale 17 bezüglich der Lagernut sind
auch die anderen Lagerschalen 13, 14, 15 und 16 ausgebildet,
in denen die Lagerringe 22, 23, 24 und 25 liegen.
Auch hier ist je eine wärmeisolierende Schicht vorgesehen.

Um den Hauptteil der Schubkraft vom Behälter 12 auf das Fahrwerk 11 zu übertragen, ist an dem Behälter 12 ein Zentrierungszapfen 41 vorgesehen, der in eine Zentrierungsbohrung 42 des
Fahrwerkes eingreift.

Des weiteren ist zwischen den Laschen 43 und 44 ein Bolzen 45
vorgesehen, in den ein nicht näher dargestellter Haken zum
Heben und Senken des Behälters 12 eingehängt werden kann.

0070329

GOFA GOCHER FAHRZEUGBAU GMBH & CO. KG

4180 Goch, Am Mooshof 15

Mehrachsiger Tankzug

P a t e n t a n·s p r ü c h e

1. Mehrachsiger Tankzug, im wesentlichen bestehend aus einem Lastkraftwagen-Fahrgestell, einem nachlaufenden Fahrwerk und einem freitragenden Tank, der auf dem nachlaufenden Fahrwerk fest und an dem Lastkraftwagen-Fahrgestell in einem Königszapfen horizontalgelenkig sowie an- und abkuppelbar gelagert ist, dadurch gekennzeichnet, daß der Tank (12) in wenigstens einer an dem nachlaufenden Fahrwerk (11) vorgesehenen Lagerschale formschlüssig gelagert und an dem nachlaufenden Fahrwerk (11) leicht lösbar befestigt ist.

2. Tankzug nach Anspruch 1, dadurch gekennzeichnet, daß an dem nachlaufenden Fahrwerk (11) mehrere in Längsrichtung des Tanks (12) miteinander fluchtende Lagerschalen (13, 14, 15, 16, 17) angeordnet sind, in denen der Tank (12) formschlüssig aufliegt.

3. Tankzug nach Anspruch 1 oder 2,

dadurch gekennzeichnet,

daß bei Verwendung eines zylindrischen Tanks (12) die Lagerschalen (13, 14, 15, 16, 17) eine halbkreisförmige

Lagerfläche haben.

4. Tankzug nach einem oder mehreren der Ansprüche 1 bis 3,

dadurch gekennzeichnet,

daß die Lagerschalen (13, 14, 15, 16, 17) aus je einem unteren Auflageteil (18) und je zwei sich an beiden Seiten an dem Auflageteil (18) anschließenden seitlichen Lagerarmen

(19, 20) bestehen.

5. Tankzug nach einem oder mehreren der Ansprüche 1 bis 4,

dadurch gekennzeichnet,

daß die seitlichen Lagerarme (19, 20) sich bis zur horizontalen Mittelebene (21) des Tanks (12) erstrecken.

6. Tankzug nach einem oder mehreren der Ansprüche 1 bis 5,

dadurch gekennzeichnet,

daß an dem Tank (12) gegenüber den Lagerschalen (13, 14, 15,

16, 17) kreisförmig umlaufende Lagerringe (22, 23, 24, 25, 26) vorgesehen sind, die formschlüssig in den Lagerschalen

(13, 14, 15, 16, 17) liegen.

7. Tankzug nach einem oder mehreren der Ansprüche 1 bis 6,

dadurch gekennzeichnet,

daß an den oberen Enden der seitlichen Lagerarme (19, 20) je eine Befestigungsplatte (27, 28) angeordnet ist.

8. Tankzug nach einem oder mehreren der Ansprüche 1 bis 6,

   dadurch gekennzeichnet,

   daß an den Lagerringen (22, 23, 24, 25, 26) des Tanks (12) oberhalb der horizontalen Mittelebene (21) Konsolen (30, 35,

   36, 37, 38) mit Befestigungsplatten (31, 32) an ihren unteren Enden angeordnet sind.


9. Tankzug nach einem oder mehreren der Ansprüche 1 bis 8,

   dadurch gekennzeichnet,

   daß an den Innenseiten der Lagerschalen (13, 14, 15, 16, 17) Lagernuten (39) sind, in denen die Lagerringe (22, 23, 24,

   25, 26) des Tanks (12) liegen.


10. Tankzug nach Anspruch 9,

    dadurch gekennzeichnet,

    daß zwischen den Lagerschalen (13, 14, 15, 16, 17) des nachlaufenden Fahrzeuges (11) und den Lagerringen (22, 23,

    24, 25, 26) des Tanks (12) eine wärmeisolierende Schicht

    (40) angeordnet ist.

DIPL.-ING. JOSEF FUNKEN

PATENTASSESSOR

4133 NEUKIRCHEN-VLUYN
Am Lerchenfeld 14
☎ 02845/5457
☎ 0203/~~396442~~ 3963442

0070329

31. März 1982

```
┌─────────────────┐
│   ABGEÄNDERTE   │
│   ANSPRÜCHE     │
└─────────────────┘
```

GOFA GOCHER FAHRZEUGBAU GMBH & CO. KG
4180 Goch, Am Mooshof 15


Mehrachsiger Tankzug


P a t e n t a n s p r ü c h e


1. Mehrachsiger Tankzug, im wesentlichen bestehend aus einem
   Lastkraftwagen-Fahrgestell, einem nachlaufenden Fahrgestell
   mit mehreren in Längsrichtung des Tanks miteinander fluchtenden Lagerschalen und einem auf den Lagerschalen formschlüssig
   aufliegenden und leicht lösbar befestigten freitragenden
   Tank, der an dem Lastkraftwagen-Fahrgestell in einem Königszapfen horizontalgelenkig sowie an- und abkuppelbar gelagert ist,
   dadurch gekennzeichnet,
   daß an dem Tank (12) gegenüber den Lagerschalen (13,14,15,16,17)
   kreisförmig umlaufende Lagerringe (22,23,24,25,26) vorgesehen sind, die formschlüssig in den Lagerschalen (13,14,15,
   16,17) liegen.


2. Tankzug nach Anspruch 1,
   dadurch gekennzeichnet,
   daß bei Verwendung eines zylindrischen Tanks (12) die
   Lagerschalen (13,14,15,16,17) eine halbkreisförmige Lagerfläche haben.

0070329

ABGEÄNDERTE ANSPRÜCHE

3. Tankzug nach Anspruch 1 oder 2,
   dadurch gekennzeichnet,
   daß die Lagerschalen (13,14,15,16,17) aus je einem unteren
   Auflageteil (18) und je zwei sich an beiden Seiten an dem
   Auflageteil (18) anschließenden seitlichen Lagerarmen
   (19,20) bestehen.

4. Tankzug nach einem oder mehreren der Ansprüche 1 bis 3,
   dadurch gekennzeichnet,
   daß die seitlichen Lagerarme (19,20) sich bis zur horizontalen Mittelebene (21) des Tanks (12) erstrecken.

5. Tankzug nach einem oder mehreren der Ansprüche 1 bis 4,
   dadurch gekennzeichnet,
   daß an den oberen Enden der seitlichen Lagerarme (19,20)
   je eine Befestigungsplatte (27,28) angeordnet ist.

6. Tankzug nach einem oder mehreren der Ansprüche 1 bis 5,
   dadurch gekennzeichnet,
   daß an den Lagerringen (22,23,24,25,26) des Tanks (12)
   oberhalb der horizontalen Mittelebene (21) Konsolen
   (30,35,36,37,38) mit Befestigungsplatten (31,32) an ihren
   unteren Enden angeordnet sind.

7. Tankzug nach einem oder mehreren der Ansprüche 1 bis 6,
   dadurch gekennzeichnet,
   daß an den Innenseiten der Lagerschalen (13,14,15,16,17)
   Lagernuten (39) sind, in denen die Lagerringe (22,23,24,25,26)
   des Tanks (12) liegen.

8. Tankzug nach Anspruch 7,
   dadurch gekennzeichnet,
   daß zwischen den Lagerschalen (13,14,15,16,17) des nachlaufenden Fahrzeuges (11) und den Lagerringen (22,23,24,
   25,26) des Tanks (12) eine wärmeisolierende Schicht (40)
   angeordnet ist.

FIG. 1

15

0070329

0070329

Fig 2

Fig. 3

4|5   0070329

Fig. 4

Fig 5

## EUROPÄISCHER RECHERCHENBERICHT

Europäisches
Patentamt

0070329

Nummer der Anmeldung

EP 81 10 5775.1

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | **EINSCHLÄGIGE DOKUMENTE** | | |
| X,Y | US - A - 3 043 599 (MEYER)<br>* Spalte 3, Zeile 60 bis Spalte 4, Zeile 17; Fig. 1 bis 6 *<br>-- | 1-5,7 | B 60 P 3/22 |
| Y | DE - A1 - 2 813 806 (BRÖDERNA RICKARDS-SON)<br>* Seite 5, Zeile 27 bis Seite 6, Zeile 27; Fig. 1 bis 4 *<br>-- | 6,8,9 | |
| A | DE - A - 1 755 766 (RICHTER)<br>* Anspruch 1; Fig. 1 bis 3 *<br>---- | 10 | RECHERCHIERTE SACHGEBIETE (Int. Cl.³)<br><br>B 60 P 3/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 18-02-1982 | LUDWIG |

EPA form 1503.1  06.78